# EUROPEAN PATENT APPLICATION

(11) **EP 2 020 343 A2**
(43) Date of publication of application: **04.02.2009**
(21) Application number: 08156977.4
(22) Date of filing: 27.05.2008
(51) Int. Cl.: B60R 21/18, B60R 21/231, B60R 21/237

(54) **Inflatable belt and inflatable belt apparatus**

(30) Priority: 02.08.2007 JP 2007202162
(71) Applicant: Takata Corporation, Tokyo 106-8510 (JP)
(72) Inventor: Yamataki, Norio, Tokyo Tokyo 106-8510 (JP)
(74) Representative: Vossius & Partner

(57) **Abstract**

An inflatable belt having good tactual feeling and an inflatable belt apparatus comprising the same are provided. A bag 20 comprises a front portion 10F and an over-shoulder portion 10S which are connected to form substantially a boomerang shape. The bag 20 is formed by folding a panel 22 into two along a boundary L₁ between panel parts 22L, 22R which form side surfaces of the left half and the right half of the bag 20 in the inflated state, respectively and each of which has substantially a boomerang shape, and sewing peripheral edges 22a of the panel parts 22L, 22R other than the boundary L₁ together by a sewing yarn 23. The bag 20 is spread flat such that the panel parts 22L, 22R are superposed on each other. Then, a portion of the over-shoulder portion 10S on the side of the boundary L₁ between the panel parts 22L, 22R is interfolded into a space between the panel parts 22L, 22R. After that, the bag 20 is folded along fold lines parallel to the boundary L₁ to reduce the width of the folded body (Fig. 2).

## Description

The present invention relates to an inflatable belt which is inflatable for restraining an occupant sitting in a vehicle seat and an inflatable belt apparatus with the inflatable belt.

As an example of an inflatable belt apparatus for restraining an occupant sitting in a vehicle seat with an inflatable belt, there is known an inflatable belt apparatus having an inflatable belt which is withdrawn from above the shoulder of the occupant to extend across the front of the occupant and of which portion to be arranged from above the occupant's shoulder to the front of the occupant is inflatable (For example, a publication JP-A-2003-312439 (Patent Document 1)).

In the inflatable belt apparatus disclosed in the publication JP-A-2003-312439, a deflection fitting is fixed to an upper portion of a pillar positioned diagonally behind the vehicle seat. The inflatable belt passing through the deflection fitting is withdrawn to extend across the front of the occupant sitting in the vehicle seat.

The inflatable belt comprises a shoulder belt section which diagonally extends from the deflection fitting to a portion near the occupant's hip at the opposite side from the deflection fitting through above one of the occupant's shoulders and across the front of the upper body of the occupant, and a lap belt section which is continued from the lower end of the shoulder belt section and extends laterally to cover a portion near the occupant's abdomen. In this publication, the shoulder belt section is composed of an envelope-shape belt having a folded inflatable bag. The envelope-shape belt is disposed such that an upper end portion thereof is positioned above the occupant's shoulder. It should be noted that the lap belt section is also composed of an envelope-shape belt.

In the event of a vehicle collision or a rollover, the shoulder belt section and the lap belt section are inflated to restrain the occupant. During this, the upper end portion of the shoulder belt section is inflated above the occupant's shoulder, that is, inflated between the occupant's head and a side wall of a vehicle cabin. By this inflation, the occupant's head is prevented from directly colliding with the side wall of the vehicle cabin.

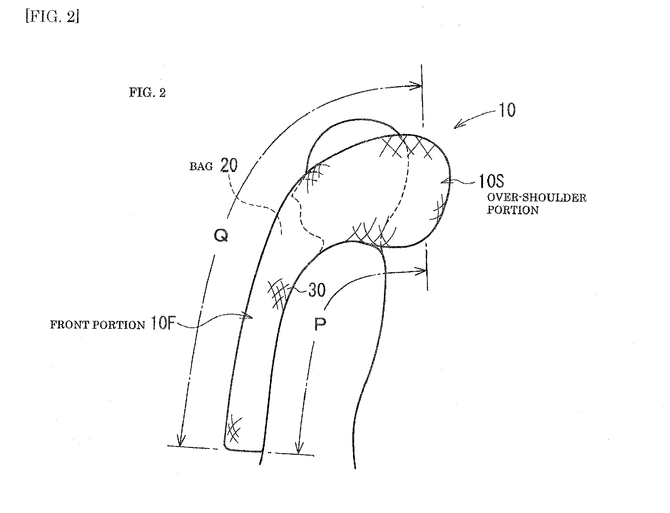

When the deflection fitting is positioned above an upper end of the seat back of the vehicle seat as shown in Fig. 2 of the publication, the shoulder belt section extending from the deflection fitting to the front of the occupant is spaced apart from the upper surface of the occupant's shoulder so that a relatively wide space is created between the upper surface of the occupant's shoulder and the shoulder belt.

For filling the space between the shoulder belt section and the upper surface of the occupant's shoulder when inflating the bag of the shoulder belt section, it is necessary to inflate the bag to extend extra downward. This structure requires significantly large volume of the bag.

Disclosed in JP-A-2007-8220 (Patent Document 2) is an inflatable belt which extends to the front of an occupant through above the occupant's shoulder and comprises a folded inflatable bag from a portion arranged above the occupant's shoulder to a portion arranged in front of the occupant. The bag has an over-shoulder portion which is disposed above the occupant's shoulder when the bag is inflated and a front portion which is disposed in front of the occupant's upper body when the bag is inflated. The bag is inflated into such a configuration that the bag is curved from the front portion to the over-shoulder portion so as to extend along the upper surface of the occupant's shoulder.

Now, the arrangement of the bag disclosed in the JP-A-2007-8220 will be described with reference to Figs. 10(a)-(c) through Figs 16(a)-(b).

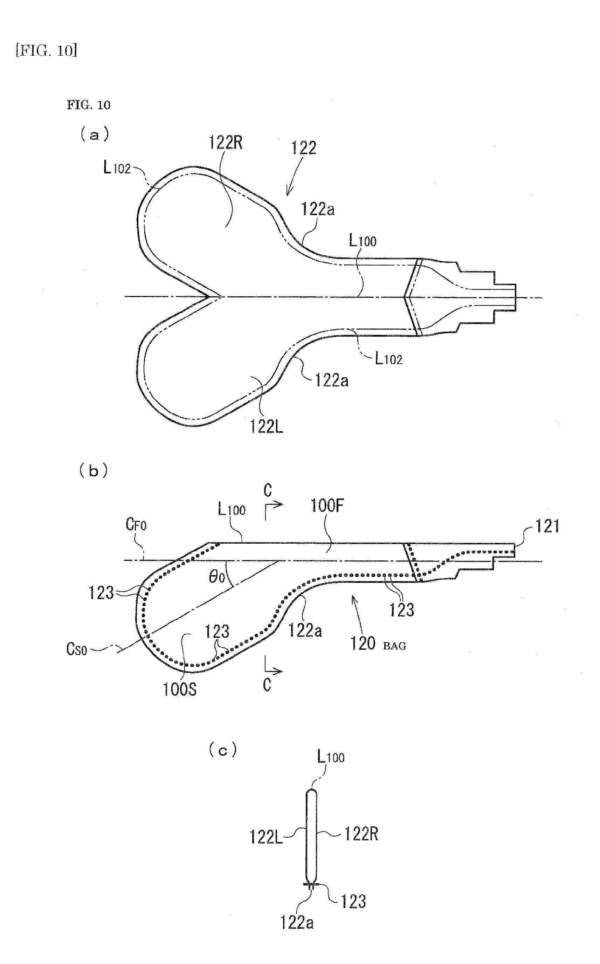

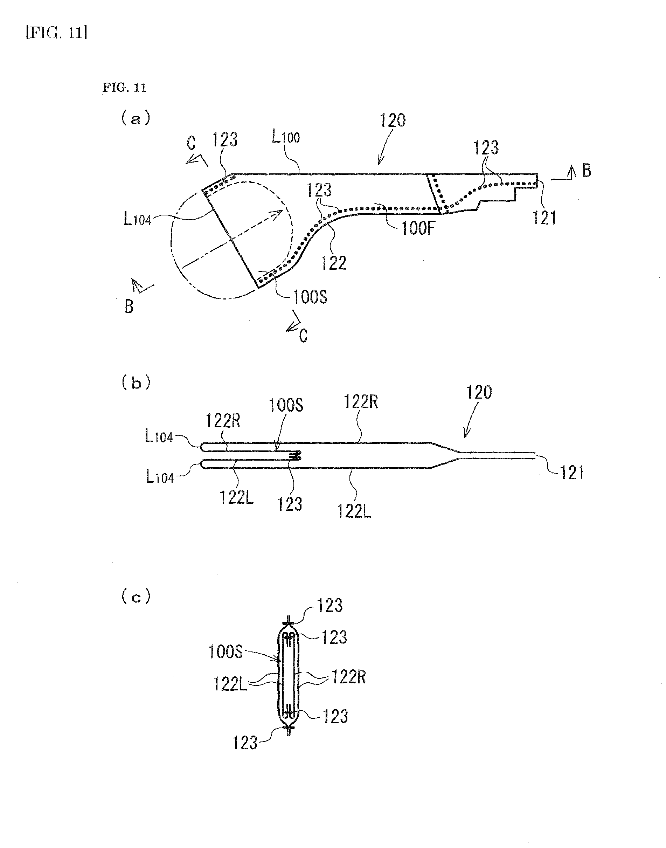

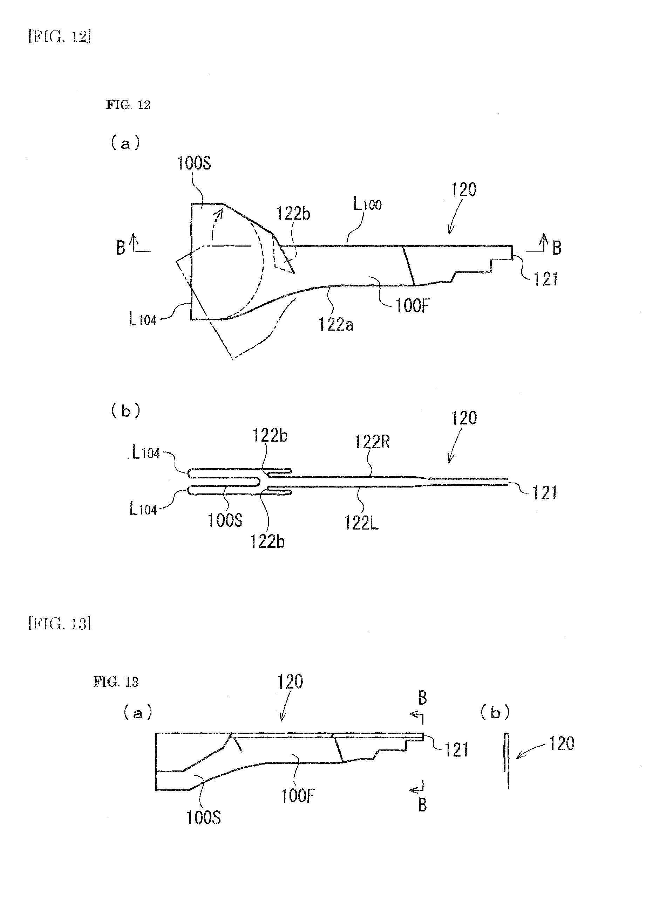

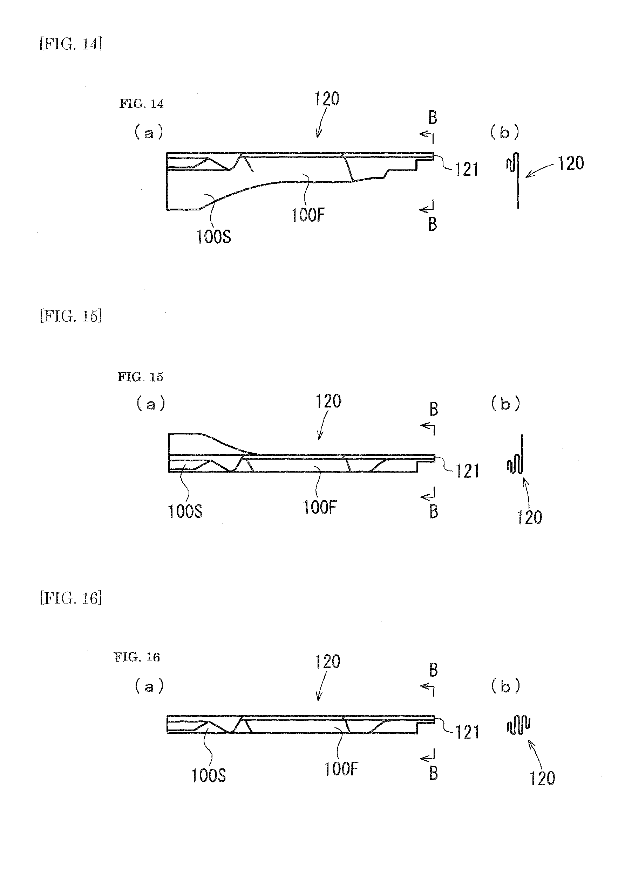

Fig. 10(a) is an exploded view of a panel (base fabric) composing the bag of the publication JP-A-2007-8220, Fig. 10(b) is a side view of the bag after being sewn, and Fig. 10(c) is a sectional view taken along a line C-C of Fig. 10(b). Figs. 11(a)-(c) through Figs. 16(a)-16(b) are illustrations for explaining the folding procedure of the bag of the publication. Figs. 11(a), 12(a), 13(a) ... 16(a) are side views of the bag, Figs. 11(b), 12(b) are sectional views taken along the line B-B of Figs. 11(a), 12(a), respectively, Fig. 11(c) is a sectional view taken along the line C-C of Fig. 11(a), and Figs. 13(b), 14(b), 15(b), 16(b) are views as seen along the line B-B of Figs. 13(a), 14(a), 15(a), 16(a), respectively. In Figs. 12(a)-(b) through Figs. 16(a)-16(b), sewing yarn 123 as will be described later are omitted from the drawings.

In the publication JP-A-2007-8220, the bag 120 has an over-shoulder portion 100S which is disposed above the occupant's shoulder and a front portion 100F which is disposed to extend from the front of the occupant's shoulder to the front of the occupant's waist.

In the publication, the bag 120 is composed of a panel 122 comprising two panel parts 122L, 122R forming the left half and the right half of the bag 120 when inflated. Each panel part 122L, 122R has substantially a boomerang shape. The panel parts 122L, 122R are connected to each other along edges (a boundary L₁₀₀) of the areas forming the side surfaces of the front portions 100F on the opposite side from the occupant so that the panel parts 122L, 122R are formed by a single sheet of panel 122.

The panel 122 is folded along the boundary L₁₀₀ between the panel parts 122L, 122R and peripheral edges 122a of the panel parts 122L, 122R other than the boundary L₁₀₀ are sewn together by the sewing yarn 123. Two-dot chain line L₁₀₂ in Fig. 10(a) indicates the sewing line of the sewing yarn 123. Accordingly, the bag 120 having the front portion 100F and the over-shoulder portion 100S which are connected to form substantially a boomerang shape is formed.

At the end of the front portion 100F opposite from the over-shoulder portion 100S, the panel parts 122L, 122R are not sewn together to form a gas introduction port 121.

As shown in Fig. 10(b), an axial line C_{F0} in the extending direction of the front portion 100F is substantially parallel with the boundary L₁₀₀ and an axial line Cso in the extending direction of the over-shoulder portion 100S has an angle θ₀ relative to the boundary L₁₀₀.

In the bag 120 of the publication, the length of the peripheral edge along the boundary L₁₀₀ from the front portion 100F to the over-shoulder portion 100S, i.e. the length of the peripheral edge at the opposite side from the occupant is longer than the length of the peripheral edge 122a from the front portion 100F to the over-shoulder portion 100S at the occupant side. Accordingly, the bag 120 forms a curved shape along the upper surface of the occupant's shoulder because the over-shoulder portion 100S is pulled to the occupant side.

In the publication JP-A-2007-8220, the bag 120 is folded by the following procedure.

First, as shown in Fig. 10(b), the bag 120 is spread flat such that the panel parts 122L, 122R are superposed on each other. Then, as shown in Figs. 11(a)-11(c), a distal end portion of the over-shoulder portion 100S is interfolded between the panel parts 122L, 122R of portions at proximal end side of the over-shoulder portion 100S along fold lines L₁₀₄ extending in a direction substantially perpendicular to the axial line Cso of the over-shoulder portion 100S.

As shown in Fig. 12, the over-shoulder portion 100S is rotated about a root portion of the over-shoulder portion 100S toward the boundary L₁₀₀ so that the bag 120 extends linearly from the front portion 100F to the over-shoulder portion 100S. In this case, a sagging portion 122b generated near the root portion of the over-shoulder portion 100S is interfolded between the panel parts 122L, 122R.

After that, the bag 120 is folded as shown in Figs. 13(a)-13(b) through 16(a)-16(b) to reduce the width of the folded body, thereby forming a slim band-like folded body.

After that, the folded body of the bag 120 is covered with a cover, thereby forming the shoulder belt section of the inflatable belt.

In the inflatable belt disclosed in the publication JP-A-2007-8220 having the aforementioned structure, the bag 120 is inflated into such a configuration that the bag is curved along the upper surface of the occupant's shoulder from the front portion 100F to the over-shoulder portion 100S. Therefore, the inflated bag 120 can be brought in contact with the upper surface of the occupant's shoulder without excessively increasing the volume of the bag 120.

In the publication JP-A-2007-8220, for folding the bag 120, the distal end portion of the over-shoulder portion 100S is interfolded between the panel parts 122L, 122R of portions at proximal end side of the over-shoulder portion 100S along the fold lines L₁₀₄ extending substantially in a direction perpendicular to the axial line Cso of the over-shoulder portion 100S. Since the sewn portion between the panel parts 122L, 122R of the outer peripheral side of the distal end portion of the over-shoulder portion 100S is reversed into the inner peripheral side of the over-shoulder portion 100S, this folding crinkles the sewn portion by the sewing yarn 123 between the panel parts 122L, 122R and areas around the sewn portion. Since user of this inflatable belt may feel irregular surfaces due to the wrinkles, the tactual feeling of the inflatable belt is not good.

The sewn portion by the sewing yarn 123 has hard texture, i.e. stiff, as compared to the other portions. The overlap of the sewn portions due to folding of the bag 120 makes the tactual feeling worse.

It is an object of the present invention to provide an inflatable belt having good tactual feeling, which comprises a folded body of a bag having an over-shoulder portion which is arranged above the occupant's shoulder and a front portion which is arranged in front of the occupant's upper body when the bag is inflated, wherein the bag is made of a panel composed of two panel parts which form the left half and the right half of the bag when the bag is inflated along the occupant, respectively and each of which has substantially boomerang shape, wherein the bag is folded into two along a boundary between the panel parts and is sewn together along the peripheral edges other than the boundary so as to form said front portion which linearly extends along the boundary and said over-shoulder portion which is continued from the front portion and extends in a direction inclined relative to the boundary.

It is another object of the present invention to provide an inflatable belt apparatus having the inflatable belt as mentioned above.

An inflatable belt of the present invention (claim 1) is an inflatable belt which is withdrawn from above a shoulder of an occupant to extend across the front of the occupant and comprises a folded body of an inflatable bag (20) of which an area from a portion to be disposed above the shoulder of the occupant to a portion to be disposed in front of the occupant is inflatable, and which is characterized in that the bag (20) in the inflated state has an over-shoulder portion (10S) which is disposed above the shoulder of the occupant and a front portion (10F) which is disposed in front of the occupant's upper body, that the bag (20) in the inflated state has a length P on an occupant side and a length Q on an outer side opposite to the occupant side in the area from the front portion (10F) to the over-shoulder portion (10S) such that the length P is shorter than the length Q, whereby the bag (20) is inflated into such a configuration that the bag (20) is bent along the upper surface of the shoulder of the occupant in the area from the front portion (10F) to the over-shoulder portion (10S), that the bag (20) is composed of a panel (22) having panel parts (22L, 22R) which form side surfaces of the left half and the right half of the bag when inflated along the occupant, respectively, and each of which has substantially a boomerang shape, that the panel (22) is folded into two along a boundary L₁ between the panel parts (22L, 22R) and sewing peripheral edges (22a) of the panel parts (22L, 22R) other than the boundary L₁ are sewn together, thereby forming a front portion (10F) linearly extending along the boundary L₁ and an over-shoulder portion (10S) continued from the front portion (10F) and extending in a direction inclined by an angle θ relative to the boundary L₁, and that the bag (20) is spread flat such that the panel parts (22L, 22R) are superposed on each other, then, a portion on the boundary L₁ side of the over-shoulder portion (10S) is interfolded into a space between the panel parts (22L, 22R), and, after that, the bag (20) is folded along fold lines parallel to the boundary L₁ to reduce the width of the folded body.

An inflatable belt of claim 2 is an inflatable belt as claimed in claim 1 which is characterized in that the angle θ is of from 10° to 45°.

An inflatable belt of claim 3 is an inflatable belt as claimed in claim 1 or 2 which is characterized in that the folded body of the bag (20) is covered by a cover (30) to maintain the folded body in the band-like shape.

An inflatable belt of claim 4 is an inflatable belt as claimed in claim 3 which is characterized in that an inner cover (40) for covering the over-shoulder portion (10S) is arranged between the cover (30) and the over-shoulder portion (10S).

An inflatable belt of claim 5 is an inflatable belt as claimed in claim 4 which is characterized in that one end portion of the inner cover (40) is connected to the front portion (10F) and the other end portion of the inner cover (40) is formed into a band-like shape protruding from the front portion (10F) to the over-shoulder portion (10S) in substantially parallel with the boundary L₁, and that the other end portion of the inner cover (40) is connected to a webbing (10a) to be wound into a seat belt retractor.

An inflatable belt apparatus of the present invention (claim 6) comprises: an inflatable belt as claimed in any one of claims 1 through 5, and an inflator for inflating the bag (20) of the inflatable belt.

### [Effects of the Invention]

In the inflatable belt and the inflatable belt apparatus of the present invention (claim 1, claim 6), the bag (20) is spread flat such that the panel parts (22L, 22R) are superposed on each other, then, a portion of the over-shoulder portion (10S) on the side of the boundary L₁ between the panel parts (22L, 22R) is interfolded into a space between the panel parts (22L, 22R), and, after that, the bag (20) is folded along fold lines parallel to the boundary L₁ to reduce the width of the folded body.

In the portion of the over-shoulder portion (10S) on the side of the boundary L₁, there is a folded portion of the panel 22 and little or no sewn portion between the panel parts 22L, 22R. Therefore, even though the portion on the boundary L₁ side of the over-shoulder portion 10S is interfolded into the space between the panel parts 22L, 22R, little or no wrinkles are created at the interfolded portion of the bag (20). Accordingly, a user may feel little or no irregular surfaces due to wrinkles of the bag (20). In addition, since little or no sewn portions between the panel parts 22L, 22R are superposed on each other, the bag (20) is not stiff. Therefore, the tactual feeling of the inflatable belt of the present invention is good.

The structure as described in claim 2 facilitates the over-shoulder portion (10S) to fit to the upper surface of the occupant's shoulder when the bag (20) is inflated.

The structure as described in claim 3 improves the durability of the bag (20) as well as preventing the bag (20) from loosing its shape.

The structure as described in claim 4 prevents interference between the over-shoulder portion (10S) and the cover (30) when the over-shoulder portion (10S) is deployed.

The structure as described in claim 5 prevents the bag (20) from sliding down within the cover (30).

Hereinafter, embodiments of the present invention will be described with reference to the attached drawings.
Fig. 1 is a perspective view showing an inflatable belt apparatus having an inflatable belt which is inflatable according to an embodiment;
Fig. 2 is a side view of a bag of the inflatable belt;
Figs. 3(a)-3(d) are structural illustrations of the bag shown in Fig. 1;
Figs. 4(a)-4(c) are illustrations for explaining the folding procedure of the bag shown in Fig. 1;
Figs. 5(a)-5(c) are illustrations for explaining the folding procedure of the bag shown in Fig. 1;
Figs. 6(a)-6(c) are illustrations for explaining the folding procedure of the bag shown in Fig. 1;
Figs. 7(a)-7(e) are illustrations showing the structure of a bag of an inflatable belt according to another embodiment;
Figs. 8(a)-8(c) are illustrations for explaining the folding procedure of the bag shown in Fig. 7;
Figs. 9(a)-9(b) are illustrations for explaining the folding procedure of the bag shown in Fig. 7;
Figs. 10(a)-10(c) are illustrations showing the structure of a bag of an inflatable belt of a prior art;
Figs. 11(a)-11(c) are illustrations for explaining the folding procedure of the bag shown in Fig. 10;
Figs. 12(a)-12(b) are illustrations for explaining the folding procedure of the bag shown in Fig. 10;
Figs. 13(a)-13(b) are illustrations for explaining the folding procedure of the bag shown in Fig. 10;
Figs. 14(a)-14(b) are illustrations for explaining the folding procedure of the bag shown in Fig. 10;
Figs. 15(a)-15(b) are illustrations for explaining the folding procedure of the bag shown in Fig. 10;
Figs. 16(a)-16(b) are illustrations for explaining the folding procedure of the bag shown in Fig. 10; and
Fig. 17 is a side view of the bag showing details of a fold line in Fig. 4(a).

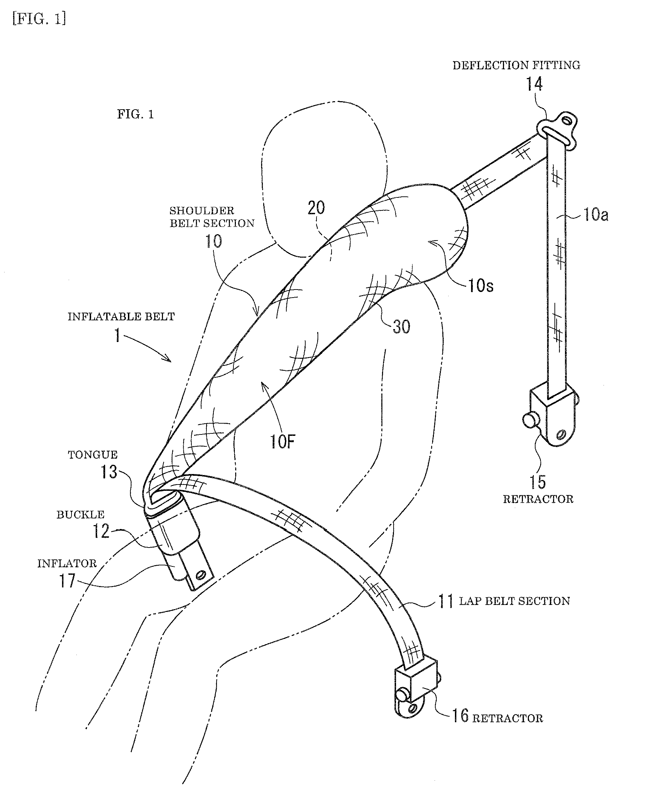

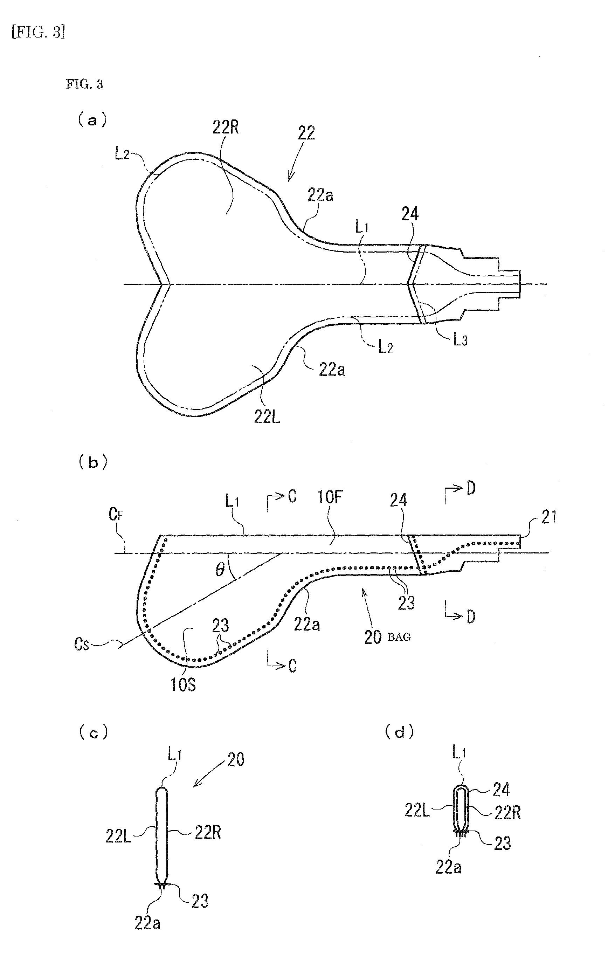

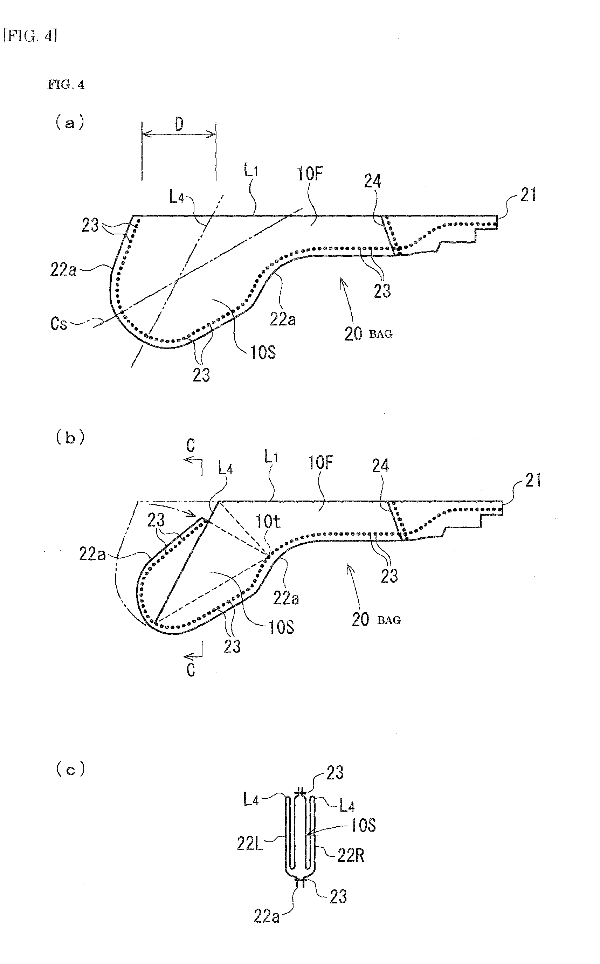

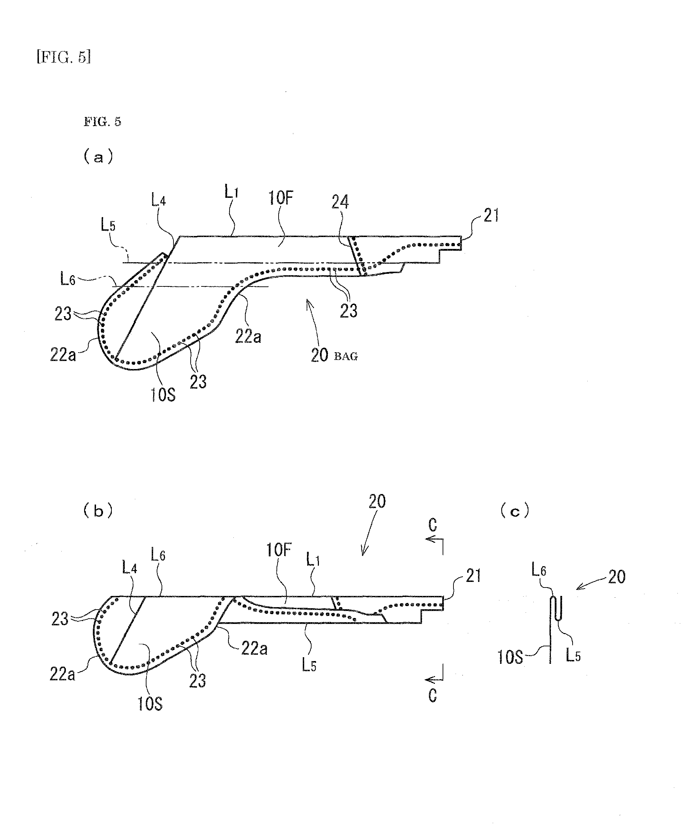

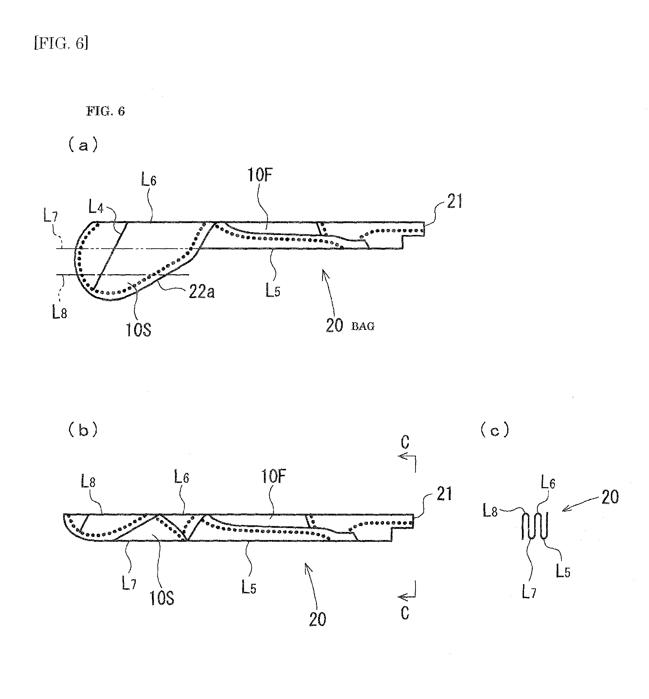

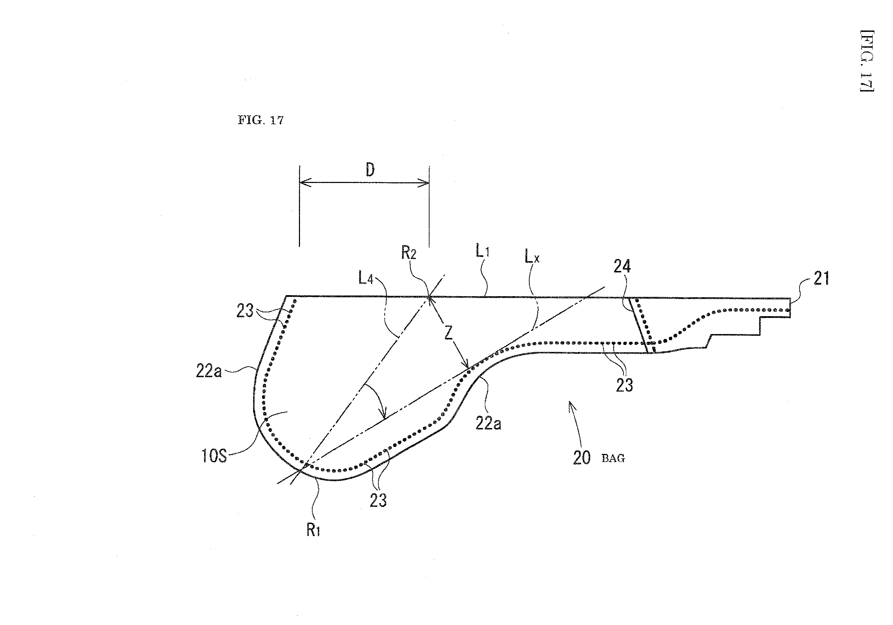

Fig. 1 is a perspective view showing an inflatable belt apparatus having an inflatable belt which is inflatable according to an embodiment, and Fig. 2 is a side view of a bag of the inflatable belt. Fig. 1 and Fig. 2 show the states where the bag is inflated. Fig. 3(a) is an exploded view of a panel (base fabric) composing the bag, Fig. 3(b) is a side view of the bag after being sewn, and Figs. 3(c), 3(d) are sectional views taken along a line C-C and a line D-D of Fig. 3(b), respectively. Figs. 4(a)-(c) through Figs. 6(a)-6(c) are illustrations for explaining the folding procedure of the bag. Figs. 4(a), 5(a), 6(a) are side views of the bag showing fold lines in the respective folding stages, Figs. 4(b), 5(b), 6(b) are side views of the bag after folded along the fold lines. Fig. 4(c) is a sectional views taken along the line C-C of Fig. 4(b), and Figs. 5(c), 6(c) are views as seen along the line C-C of Figs. 5(b), 6(b), respectively. Fig. 17 is a side view of the bag showing details of a fold line in Fig. 4(a).

The inflatable belt apparatus of this embodiment comprises a shoulder belt section 10 which passes through above one shoulder of an occupant sitting in a vehicle seat and extends in front of the occupant's upper body diagonally (from upper left to lower right in this embodiment), a webbing 10a which is connected to the shoulder belt section 10, a lap belt section 11 which extends laterally to cover a portion near the occupant's abdomen, a buckle 12 which is disposed adjacent to a side (the right side in this embodiment) of the seat, a tongue 13 which is inserted into and latched with the buckle 12 when the belt is used, and a deflection fitting 14 for guiding the webbing 10a.

In this embodiment, the inflatable belt 1 is composed of the shoulder belt section 10, the webbing 10a, and the lap belt section 11.

In this embodiment, the shoulder belt section 10 comprises a bag 20 which has a thick band shape and which is folded into a slim band shape and is covered by a cover 30. Normally, the shoulder belt section 10 is held in a band shape.

As shown in Fig. 2, the bag 20 has an over-shoulder portion 10S which is disposed above the occupant's shoulder and a front portion 10F which is disposed to extend across the front of the occupant's upper body, i.e. from the front of the occupant's shoulder to the front of the occupant's waist. The over-shoulder portion 10S and the front portion 10F are continuous. As shown in the drawings, the bag 20 is adapted to be inflated into such a configuration that the bag 20 is curved from the front portion 10F to the over-shoulder portion 10F so as to extend along the upper surface of the occupant's shoulder.

That is, as shown in Fig. 2, the bag 20 when inflated has a length P on an occupant side and a length Q on an outer side opposite to the occupant side in a region from the front portion 10F to the over-shoulder portion 10S such that the length P is shorter than the length Q. Accordingly, the bag 20 forms a curved shape along the upper surface of the occupant's shoulder because the over-shoulder portion 10S is pulled to the occupant side.

The bag 20 is composed of a panel 22 comprising two panel parts 22L, 22R forming the left half and the right half of the bag 20 when inflated. Each panel part 22L, 22R has substantially a boomerang shape. As shown in Fig. 3(a), the panel parts 22L, 22R are connected to each other along edges (a boundary L₁) of the areas forming the side surfaces of the front portion 10F on the opposite side from the occupant so that the panel parts 22L, 22R are formed by a single sheet of panel 22.

In this embodiment, the panel parts 22L, 22R are configured such that edge portions, on the boundary L₁ side, of the areas forming the side surfaces of the over-shoulder portion 10S protrude in a direction apart from the front portion 10F as compared to the panel parts 122L, 122R of the publication JP-A-2007-8220.

The panel 22 is folded along the boundary L₁ between the panel parts 22L, 22R and peripheral edges 22a of the panel parts 22L, 22R other than the boundary L₁ are sewn together by a sewing yarn 23. Two-dot chain line L₂ in Fig. 3(a) indicates the sewing line of the sewing yarn 23. Accordingly, the bag 20 having the front portion 10F and the over-shoulder portion 10S which are connected to form substantially a boomerang shape is formed.

At the end of the front portion 10F opposite from the over-shoulder portion 10S, the panel parts 22L, 22R are not sewn together to form a gas introduction port 21. Numeral 24 in Fig. 3(a) designates a reinforcing cloth for reinforcing a portion around the gas introduction port 21 in the panel 22 and a two-dot chain line L₃ indicates a sewn line whereby the reinforcing cloth 24 is sewn to the panel 22.

As shown in Fig. 3(b), an axial line C_{F} in the extending direction of the front portion 10F is substantially parallel with the boundary L₁ and an axial line Cs in the extending direction of the over-shoulder portion 10S has an angle θ relative to the axial line C_{F} of the front portion 10F, i.e. relative to the boundary L₁. In the present invention, the angle θ is preferably of from 10° to 45° when the bag 20 is inflated.

The aforementioned length Q on the outer side (opposite to the occupant side) of the bag 20 is a length of an edge (hereinafter, sometimes referred to as the edge L₁) on the boundary L₁ side of the panel parts 22L, 22R from the front portion 10F to the over-shoulder portion 10S, while the length P on the occupant side is a length of an edge 22a opposite from the boundary L₁ of the panel parts 22L, 22R from the front portion 10F to the over-shoulder portion 10S. The edge 22a is shorter than the edge L₁.

Now, the folding procedure of the bag 20 will be described.

First, as shown in Fig. 3(b), the bag 20 is spread flat such that the panel parts 22L, 22R are superposed on each other. Then, as shown in Fig. 4(b), a portion on the boundary L₁ side of the over-shoulder portion 10S is interfolded along a fold line L₄ crossing the boundary L₁ into a space between the panel parts 22L, 22R at a portion on the opposite side from the boundary L₁ of the over-shoulder portion 10S. In this folding, as shown in Fig. 4(b), the portion on the boundary L₁ side of the over-shoulder portion 10S is inserted between the panel parts 22L, 22R until the leading edge 10t in the direction of interfolding the over-shoulder portion 10S comes in contact with a sewn portion (hereinafter, sometimes referred to as the sewn portion 23) by the sewing yarn 23 at the edge 22a opposite to the boundary L₁ from the inside of the bag 20.

As shown in fig. 4(a), in this embodiment, the fold line L₄ extends in a direction inclined from the axial line Cs of the over-shoulder portion 10S and crosses the boundary L₁ at such a position that one end of the fold line L₄ is on the other side of the front portion 10F relative to the axial line Cs and the other end of the fold line L₄ meets the edge 22a of the panel parts 22L, 22R at a position slightly near the front portion 10F relative to the cross point between the fold line L₄ and the axial line Cs of the over-shoulder portion 10S, i.e. the distal end in the extending direction of the over-shoulder portion 10S. In the present invention, the location and the extending direction of the fold line L₄ are not limited thereto. All that is required is that one end portion of the fold line L₄ crosses the boundary L₁.

Mark R₁ in Fig. 17 indicates a cross point between the sewn portion 23, sewing the peripheral edges 22a of the over-shoulder portion 10S together, and the fold line L₄, mark R₂ indicates a cross point between the boundary L₁ and the fold line L₄. The portion of the over-shoulder portion 10S is interfolded along the fold line L₄ and is rotated about the cross point R₁ toward the front portion 10F so that the inner surface of the portion of the over-shoulder portion 10S comes in contact with the inner surface of the bag at the sewing portion 23. A tangential line on the contact position is indicated by a two-dot chain line Lx in Fig. 17. In the present invention, as shown in Fig. 17, a distance D from the distal end of the boundary L₁ on the over-shoulder portion 10S to the cross point R₂ is preferably from 1.5 to 2.5 times, more preferably twice, longer than the minimum distance Z between the cross point R₂ and the line Lx.

After that, the bag 20 is folded along fold lines L₅ through L₈, which are parallel to the boundary L₁, as shown in Figs. 5(a)-5(c) through 6(a)-6(c) to reduce the width of the folded body, thereby forming a slim band-like folded body.

After that, the slim band-like folded body of the bag 20 is covered with a cover 30 to maintain its band-like state, thereby forming the shoulder belt section 10. It should be noted that, besides the cover 30, a band or the like (not shown) may be employed to maintain its band-like body of the bag 20.

The aforementioned webbing 10a is connected to one end of the shoulder section 10 on the over-shoulder portion 10S side by sewing or the like and a tongue 13 is connected to the other end (the gas introduction port 21 side) of the shoulder section 10.

The webbing 10a is composed of a normal belt similar to a non-inflatable seat belt which is conventionally typical and is passed through the deflection fitting 14 such that the webbing 10a is slidable. The end of the webbing 10a is connected to a seat belt retractor with emergency locking mechanism (ELR) 15 fixed to a vehicle body such that the webbing 10a can be wound up by the seat belt retractor 15.

In this embodiment, an inflator 17 which is activated in the event of an emergency such as a vehicle collision to generate high-pressure gas is connected to the buckle 12. The tongue 13 is provided with a passage (not shown) for introducing the gas from the inflator 17 to the shoulder belt section 10. The gas introduction port 21 of the bag 20 is connected to the passage.

In this embodiment, the lap belt section 11 is composed of a normal belt which is similar to a typical non-inflatable seat belt. One end of the lap belt section 11 is connected to the tongue 13 and the other end of the lap belt section 11 is a seat belt retractor (ELR) 16 which is disposed on the opposite side of the seat from the buckle 12.

The inflatable belt 1 is used in the similar way of the normal seat belt.

In the inflatable belt 1, the bag 20 is spread flat such that the panel parts 22L, 22R are superposed on each other. Then, the portion on the boundary L₁ side of the over-shoulder portion 10S is interfolded into a space between the panel parts 22L, 22R. After that, the bag 20 is folded along fold lines parallel to the boundary L₁ to reduce the width of the folded body.

In the portion on the boundary L₁ side of the over-shoulder portion 10S, there is a folded portion of the panel 22 and little or no sewn portion by the sewing yarn 23 between the panel parts 22L, 22R. Therefore, even though the portion on the boundary L₁ side of the over-shoulder portion 10S is inserted into the space between the panel parts 22L, 22R, little or no wrinkles are created at the interfolded portion of the bag (20). Accordingly, a user may feel little or no irregular surfaces due to wrinkles of the bag 20. In addition, since little or no sewn portions by the sewing yarn 23 between the panel parts 22L, 22R are superposed on each other, the bag 20 is not stiff. Therefore, the tactual feeling of the inflatable belt 1 is good.

The action of the inflatable belt apparatus having the inflatable belt 1 as mentioned above is as follows.

As the inflator 17 is actuated in the event of a vehicle collision or rollover, gas is introduced into the bag 20 through the aforementioned passage and the gas introduction port 21, whereby the bag 20 is inflated to increase its thickness (diameter) as shown in Fig. 2.

The inflatable belt 1 is configured such that the bag 20 is inflated into a curved shape to extend along the upper surface of the occupant's shoulder from the front portion 10F to the over-shoulder portion 10S. This configuration enables the bag 20 to be brought in contact with the upper surface of the occupant's shoulder without excessively increasing the volume of the bag 20.

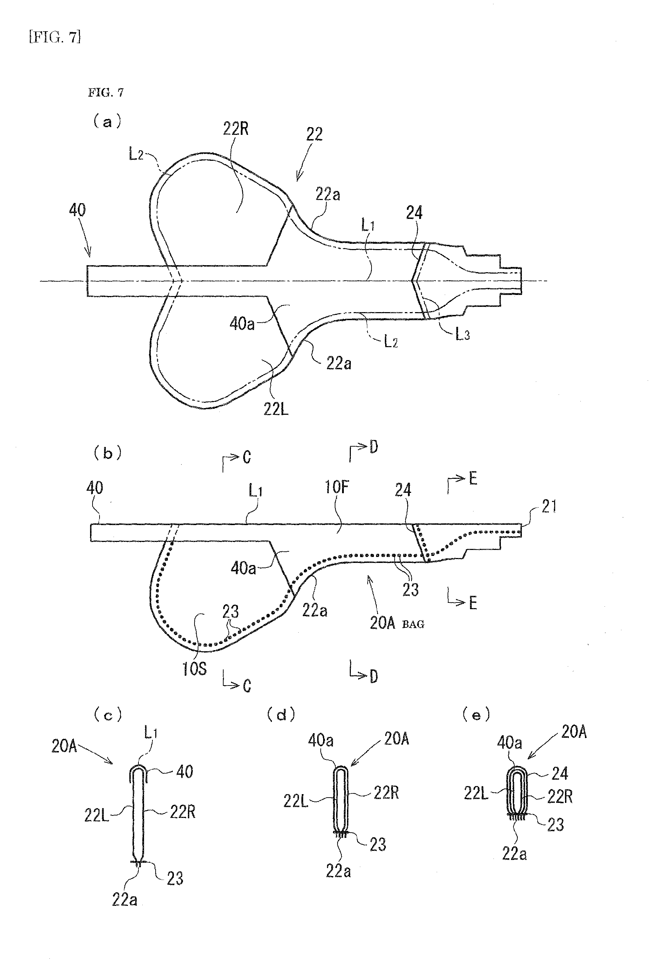

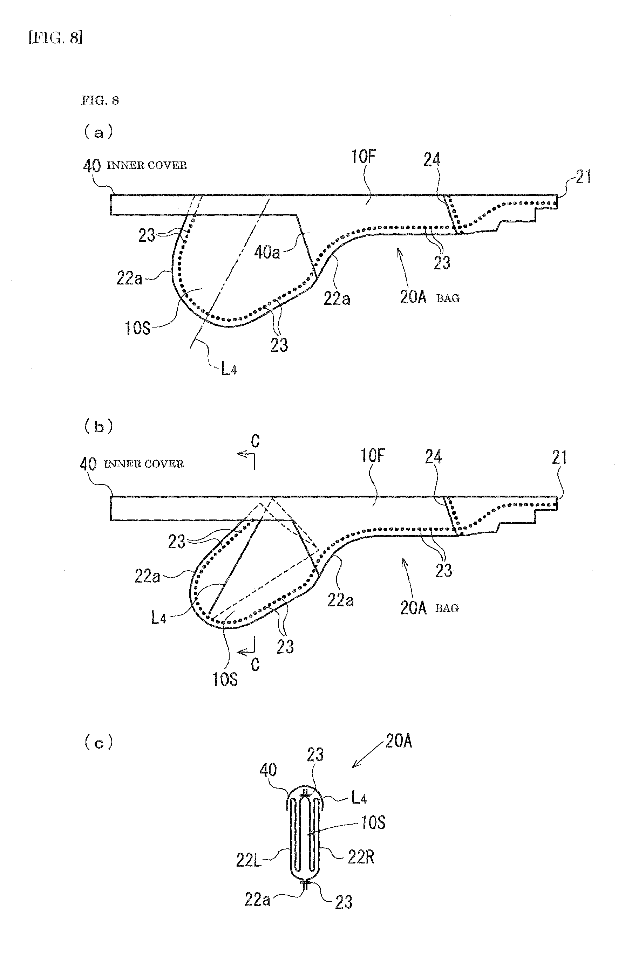

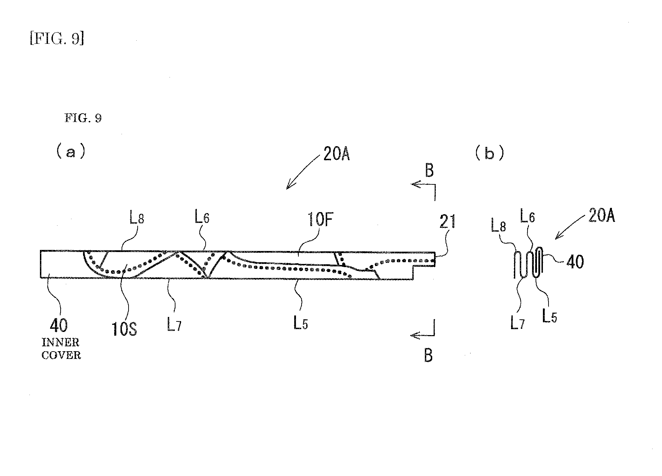

Figs. 7(a)-7(e) are illustrations showing the structure of a bag of an inflatable belt according to another embodiment, and Figs. 8(a)-8(c) and Figs. 9(a), 9(b) are illustration for explaining the folding procedure of the bag. Fig. 7(a) is an exploded view of a panel composing the bag, Fig. 7(b) is a side view of the bag after sewing, and Figs. 7(c)-7(e) are sectional views of the bag taken along a line C-C, a line D-D, and a line E-E in Fig. 7(b). Fig. 8(a) is a side view of a bag indicating a fold line, and Fig. 8(b) is a side view of the bag after folding the bag along the fold line shown in Fig. 8(a). Fig. 8(c) is a sectional view taken along a line C-C of Fig. 8(b). Fig. 9(b) is an illustration as seen in a direction shown by arrow B-B in Fig. 9(a).

The bag 20A of this embodiment comprises an inner cover 40 for covering an over-shoulder portion 10S of the folded body of the bag 20A within a cover 30.

As shown in Fig. 7(a), in this embodiment, the inner cover 40 has a band-like shape. On end of the inner cover 40 is connected to a front portion 10F and the other end of the inner cover 40 protrudes from the front portion 10F to the over-shoulder portion 10S substantially in parallel with a boundary L₁ between panel parts 22L, 22R.

The width of the inner cover 40 is about twice as large as the width of the folded body of the bag 20A which is folded into a slim band-like shape as shown in Figs. 9(a), 9(b). The length of the inner cover 40 is longer than the length of a folded portion corresponding to the over-shoulder portion 10S in the folded body of the bag 20A.

As shown in Fig. 7(a), in this embodiment, the inner cover 40 is arranged such that the center line in the width direction is substantially coincide with an extending line of the boundary L₁ between the panel parts 22L, 22R of the panel 22 when the panel 22 is in the exploded state. The inner cover 40 is provided at its proximal end with a mounting piece 40a which is mounted to the panel 22. The mounting piece 40a is arranged over the outer surfaces of the both panel parts 22L, 22R. In this embodiment, the mounting piece 40a has a shape and a size substantially equal to those of a portion combining areas of the both panel parts 22L, 22R forming the side surfaces of the front portion 10F.

For manufacturing the bag 20A, as shown in Fig. 7(a), the panel 22 together with the mounting piece 40a is folded into two along the boundary L₁ in a state that the mounting piece 40a is superposed on the area forming the side surfaces of the front portion 10F of the panel parts 22L, 22R, and peripheral edges 22a of the panel parts 22L, 22R other than the boundary L₁ are sewn together by a sewing yarn 23. During this, as shown in Fig. 7(d), the peripheral edge of the mounting piece 40a superposed on the peripheral edges 22a is also sewn together. Accordingly, the mounting piece 40a is mounted to the front portion 10F. In addition, the inner cover 40 is also folded into two along the center line in the width direction (indicated by a dashed-dotted line common to the boundary L₁ between the panel parts 22L, 22R in Fig. 7(a)).

In this embodiment, as shown in Fig. 7(e), a reinforcing cloth 24 for the gas introduction port 21 is superposed on the outer side of the mounting piece 40a. However, the location of the reinforcing cloth 24 is not limited thereto.

The other structure of the bag 20A is the same as that of the bag 20 of the aforementioned embodiment. In Figs. 7(a)-7(e) through Fig. 9(a)-9(b), the same numerals as Fig. 1 through Fig. 6(a)-6(c) designate the same components.

The bag 20A is also folded into a slim band-like shape by the same folding procedure as the bag 20 of the aforementioned embodiment. However, when the portion of the over-shoulder portion 10S on the boundary L1 side is interfolded into a space between the panel parts 22L, 22R at the portion of the over-shoulder portion 10F on the opposite side of the boundary L1 side, the folded portion of the over-shoulder portion 10S is covered with the inner cover 40 as shown in Figs. 8(b), 8(c). After that, the bag 20A is folded along fold lines L₅ through L₈, which are parallel to the boundary L₁ to reduce the width of the folded body, thereby forming a slim band-like folded body as shown in Figs. 9(a), 9(b).

After that, the slim band-like folded body of the bag 20A is covered with a cover 30. The inner cover 40 is disposed between the folded portion of the over-shoulder portion 10S of the bag 20A and the cover 30.

In this embodiment, a distal end of the inner cover 40 is superposed on the end of the cover 30 on the over-shoulder portion 10S side and the distal end of the inner cover 40 and the end of the cover 30 on the over-shoulder portion 10S side are sewn together to the webbing 10a, but not shown.

In the inflatable belt with the bag 20A, the inner cover 40 is disposed between the folded portion of the over-shoulder portion 10S in the folded body of the bag 20A and the cover 30, thereby preventing the interference between the over-shoulder portion 10S and the cover 30 while the bag 20A is inflated and the over-shoulder portion 10S is deployed.

Since the bag 20A is also folded by the same folding procedure as the bag 20 of the aforementioned embodiment, the tactual feeling of the inflatable belt comprising the folded body of the bag 20A is also good similarly to the inflatable belt comprising the folded body of the bag of the aforementioned embodiment.

Since the proximal end of the inner cover 40 is connected to the front portion 10F and the distal end of the inner cover 40 is connected to the webbing 10a, the bag 20A is prevented from sliding down toward the tongue 13 within the cover 30.

The aforementioned embodiments of the present invention are just examples and the present invention is not limited to the illustrated configurations.

Though only the shoulder belt section 10 is structured to be inflated in the inflatable belt of the aforementioned embodiments, the lap belt section 11 may be structured to be inflated. The system for supplying gas into the bag of the inflatable belt, the system for winding up the belt when not used, and the configuration for passing the belt through the tongue and the deflection fitting are not limited to the illustrated examples.

Though the thickness of the over-shoulder portion 10S is larger than that of the front portion 10F and the thickness of the front portion 10F is even over its entire length in the state that the bag 20 is inflated in the aforementioned embodiments, the thickness of each part of the inflatable portion is not limited thereto.

## Claims

1. An inflatable belt which is withdrawn from above a shoulder of an occupant to extend across the front of the occupant and comprises a folded body of an inflatable bag (20) of which an area from a portion to be disposed above the shoulder of the occupant to a portion to be disposed in front of the occupant is inflatable, wherein
the bag (20) in the inflated state has an over-shoulder portion (10S) which is disposed above the shoulder of the occupant and a front portion (10F) which is disposed in front of the occupant's upper body, wherein
the bag (20) in the inflated state has a length P on an occupant side and a length Q on an outer side opposite to the occupant side in the area from the front portion (10F) to the over-shoulder portion (10S) such that the length P is shorter than the length Q, whereby the bag (20) is inflated into such a configuration that the bag (20) is bent along the upper surface of the shoulder of the occupant in the area from the front portion (10F) to the over-shoulder portion (10S), wherein
the bag (20) is composed of a panel (22) having panel parts (22L, 22R) which form side surfaces of the left half and the right half of the bag when inflated along the occupant, respectively, and each of which has substantially a boomerang shape, wherein
the panel (22) is folded into two along a boundary L₁ between the panel parts (22L, 22R) and sewing peripheral edges (22a) of the panel parts (22L, 22R) other than the boundary L₁ are sewn together, thereby forming a front portion (10F) linearly extending along the boundary L₁ and an over-shoulder portion (10S) continued from the front portion (10F) and extending in a direction inclined by an angle θ relative to the boundary L₁, and wherein
the bag (20) is spread flat such that the panel parts (22L, 22R) are superposed on each other, then, a portion on the boundary L₁ side of the over-shoulder portion (10S) is interfolded into a space between the panel parts (22L, 22R), and, after that, the bag (20) is folded along fold lines parallel to the boundary L₁ to reduce the width of the folded body.

2. An inflatable belt as claimed in claim 1, wherein said angle θ is of from 10° to 45°.

3. An inflatable belt as claimed in claim 1 or 2, wherein the folded body of said bag (20) is covered by a cover (30) to maintain the folded body in the band-like shape.

4. An inflatable belt as claimed in claim 3, wherein an inner cover (40) for covering said over-shoulder portion (10S) is arranged between the cover (30) and said over-shoulder portion (10S).

5. An inflatable belt as claimed in claim 4, wherein one end portion of the inner cover (40) is connected to the front portion (10F) and the other end portion of the inner cover (40) is formed into a band-like shape protruding from the front portion (10F) to said over-shoulder portion (10S) in substantially parallel with said boundary L₁, and wherein
the other end portion of the inner cover (40) is connected to a webbing (10a) to be wound into a seat belt retractor.

6. An inflatable belt apparatus comprising: an inflatable belt as claimed in any one of claims 1 through 5, and an inflator for inflating said bag (20) of said inflatable belt.
